# FASCICULE DE BREVET EUROPEEN

(11) **EP 3 676 011 B1**
(45) Date de publication et mention de la délivrance du brevet: **15.05.2024**
(21) Numéro de dépôt: 18827176.1
(22) Date de dépôt: 19.11.2018
(51) Int. Cl.: B01L 3/02, G01N 35/00

(54) **ACCESSOIRE FONCTIONNALISE POUR PIPETTE MÉCANIQUE DE PRÉLÈVEMENT**
FUNKTIONIERTES ZUBEHÖR FÜR MECHANISCHE PIPETTE DER PROBENÜBUNG
FUNCTIONALIZED ACCESSORY FOR MECHANICAL PIPETTE OF SAMPLING

(30) Priorité: 20.11.2017 FR 1760945
(43) Date de publication de la demande: 08.07.2020
(73) Titulaire: GILSON SAS, 95400 Villiers-le-Bel (FR)
(72) Inventeur: DE MAACK, Frédéric, 75016 Paris (FR)
(74) Mandataire: Brevalex
(86) Numéro de dépôt international: PCT/FR2018/052899
(87) Numéro de publication internationale: WO 2019/097191

(56) Documents cités:
- EP-A1- 2 182 456
- WO-A1-2014/111336
- WO-A1-2017/050781
- US-A1- 2015 018 775
- US-A1- 2016 030 679

## Description

### DOMAINE TECHNIQUE

L'invention se rapporte au domaine des pipettes de prélèvement, également dénommées pipettes de laboratoire ou encore pipettes de transfert de liquide, destinées au prélèvement et à la dispense de liquide dans des récipients ou similaires.

Les pipettes concernées par la présente invention sont plus particulièrement les pipettes mécaniques à actionnement manuel. Ces pipettes sont destinées à être tenues en main par un opérateur durant les opérations de prélèvement et de dispense de liquide. Ces opérations sont réalisées par la mise en mouvement d'un bouton de commande obtenue par l'application d'une pression d'actionnement sur ce même bouton, via le pouce de l'opérateur. Cette pression d'actionnement est transmise au piston de la pipette, dont le déplacement provoque l'aspiration ou la dispense du liquide. A titre informatif, il est noté que les pipettes mécaniques contrastent avec les pipettes dites électroniques, au sein desquelles le mouvement du piston n'est pas généré par l'effort déployé par l'opérateur, mais par un moteur recevant une consigne de ce même opérateur exerçant une pression sur le bouton.

### ETAT DE LA TECHNIQUE ANTERIEURE

WO2017/050781 divulgue un kit comprenant une pipette mécanique à actionnement manuel, ainsi qu'un accessoire destiné à être monté de manière réversible autour d'un corps supérieur de pipette, ledit accessoire comprenant un corps d'accessoire ainsi que des moyens de fixation du corps.

Il existe des besoins de plus en plus conséquents en matière de traçabilité de la vie et des opérations effectuées avec une pipette, notamment vis-à-vis du suivi de maintenance. Par ailleurs, il existe aussi un besoin grandissant d'aide au pipetage en temps réel.

Pour tenter de répondre à ces besoins, les pipettes mécaniques à actionnement manuel doivent généralement faire l'objet de modifications profondes de leur conception, pour intégrer de nouvelles fonctions. Cependant, ces travaux de re-conception s'avèrent longs et coûteux.

Pour répondre au moins partiellement aux besoins identifiés ci-dessus, sans engendrer les inconvénients d'une re-conception importante des pipettes mécaniques, l'invention a pour objet un kit comprenant une pipette mécanique de prélèvement à actionnement manuel, ainsi qu'un accessoire destiné à être monté de manière réversible autour d'un corps supérieur de pipette formant poignée, ledit accessoire comprenant un corps d'accessoire ainsi que des moyens de fixation du corps d'accessoire sur le corps supérieur de pipette, l'accessoire comprenant également, fixés au corps d'accessoire et/ou auxdits moyens de fixation :
a) un module d'alimentation électrique ;
b) au moins un capteur alimenté électriquement par ledit module d'alimentation ; et
   - au moins un module parmi lesquels :
      c) un module d'affichage des données obtenues par le / les capteurs ;
      d) un module d'alarme destinée à être activée en fonction des données obtenues par le / les capteurs ;
      e) un module de communication sans fil permettant à l'accessoire de communiquer d'une part avec le / les capteurs, et d'autre part avec un appareil de traitement de l'information agencé à distance de la pipette, et en ce que le corps d'accessoire comporte un crochet de support d'index, destiné à former une butée axiale pour l'index d'un opérateur tenant la pipette équipée de l'accessoire au cours d'une opération de pipetage, ledit crochet définissant un creux formant partie desdits moyens de fixation, ledit creux recevant un crochet de support d'index prévu sur le corps supérieur de pipette formant poignée.

L'invention apporte ainsi une réponse simple, performante et peu coûteuse permettant d'assurer la traçabilité de la vie et des opérations effectuées avec la pipette, et/ou de lui conférer une aide au pipetage en temps réel.

L'accessoire selon l'invention est ainsi prévu pour être rapporté autour du corps supérieur de pipette formant poignée, à la manière d'une coque. Il peut de ce fait être facilement adapté à tout le parc de pipettes mécaniques existantes, dans le but de les fonctionnaliser simplement et à coût raisonnable. Grâce à cet accessoire selon l'invention, les pipettes mécaniques peuvent avantageusement disposer de fonctionnalités généralement réservées aux pipettes électroniques.

L'invention présente par ailleurs au moins l'une quelconque des caractéristiques optionnelles suivantes, prises isolément ou en combinaison.

L'accessoire comprend également, fixés au corps d'accessoire et/ou auxdits moyens de fixation, au moins l'un des éléments suivants :
f) un microcontrôleur de traitement des données obtenues par le / les capteurs ;
g) une horloge temps réel destinée à l'horodatage des opérations de pipetage et/ou à la surveillance des opérations de maintenance, par exemple pour surveiller la prochaine calibration à effectuer.

En outre, ledit au moins un capteur correspond à au moins l'un des éléments suivants :
- un accéléromètre ;
- un capteur de force ;
- un ou plusieurs capteurs environnementaux, parmi lesquels un capteur de pression atmosphérique et un capteur de température de l'air ambiant ; et
- un capteur infrarouge pour la mesure de la température de l'échantillon prélevé par la pipette.

D'autres capteurs peuvent bien évidemment être embarqués sur l'accessoire afin de renforcer les fonctions de traçabilité et/ou d'aide au pipetage, sans sortir du cadre de l'invention.

De préférence, ledit module d'alarme peut être du type sonore, et/ou lumineux, et/ou haptique.

Ledit module de communication sans fil peut être du type Bluetooth.

Le corps d'accessoire comporte un crochet de support d'index, destiné à former une butée axiale pour l'index d'un opérateur tenant la pipette équipée de l'accessoire au cours d'une opération de pipetage, ledit crochet définissant de préférence un creux formant partie desdits moyens de fixation, ledit creux étant destiné à recevoir un crochet de support d'index prévu sur le corps supérieur de pipette formant poignée. Néanmoins, l'accessoire pourrait ne pas intégrer un tel crochet et se situer sous le crochet du corps supérieur de pipette, sans sortir du cadre de l'invention.

Ledit crochet de support d'index peut porter au moins l'un des éléments a) à g), et de préférence un capteur de force agencé au niveau d'une partie inférieure de ce crochet.

Ledit crochet de support d'index peut être réalisé à l'aide de deux parties distinctes montées l'une sur l'autre, parmi lesquelles une partie supérieure de crochet et une partie inférieure de crochet entre lesquelles est défini ledit creux lorsqu'elles sont assemblées.

Le corps d'accessoire peut comporter également une partie centrale destinée à longer axialement le corps supérieur de la pipette, et présentant de préférence une ouverture formant une fenêtre de visualisation.

Ladite partie centrale porte au moins l'un des éléments a) à g), et de préférence le module d'alimentation électrique.

Ladite partie centrale est destinée à s'étendre sur sensiblement toute la longueur du corps supérieur de pipette, sur une largeur de préférence comprise entre 1 et 2 cm, et sur une épaisseur de préférence comprise entre 0,1 et 0,5 cm.

Enfin, les moyens de fixation du corps d'accessoire comportent un anneau destiné à entourer le corps supérieur de pipette, et/ou un clip destiné à entourer partiellement ce corps supérieur de pipette.

L'invention a également pour objet un kit comprenant une pipette mécanique de prélèvement à actionnement manuel, ainsi qu'un tel accessoire destiné à être monté de manière réversible autour d'un corps supérieur de pipette formant poignée.

La pipette peut comporter une bouton de pipetage équipé d'au moins un capteur additionnel capable de communiquer avec ledit module de communication sans fil prévu dans l'accessoire.

Enfin, la pipette comprend un dispositif d'affichage du volume à prélever, ledit dispositif étant visible au travers d'une fenêtre prévue sur le corps supérieur de pipette, et en configuration assemblée sur la pipette, ladite ouverture de la partie centrale de l'accessoire coïncide avec ladite fenêtre du corps supérieur de pipette.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 représente une vue en perspective d'un kit selon un mode de réalisation préféré de l'invention, comprenant une pipette mécanique ainsi qu'un accessoire représenté dans un état non-monté sur la pipette ;
- la figure 2 représente une vue de côté du kit montré sur la figure précédente, toujours dans un état non-monté de l'accessoire ;
- la figure 3 représente une vue similaire à celle de la figure 1, avec l'accessoire représenté dans un état monté sur la pipette ;
- la figure 4 représente une vue en coupe prise le long de la ligne IV-IV de la figure 3 ;
- la figure 5 est une vue de dessous d'une partie supérieure du crochet de l'accessoire montré sur les figures précédentes ;
- la figure 6 est une vue en perspective du kit montré sur les figures précédentes, dans un état adopté au cours de l'installation de l'accessoire sur la pipette ; et
- les figures 7A à 7D montrent d'autres modes de réalisations préférés pour l'accessoire de pipette.

### EXPOSE DETAILLE DE MODES DE REALISATION PREFERES

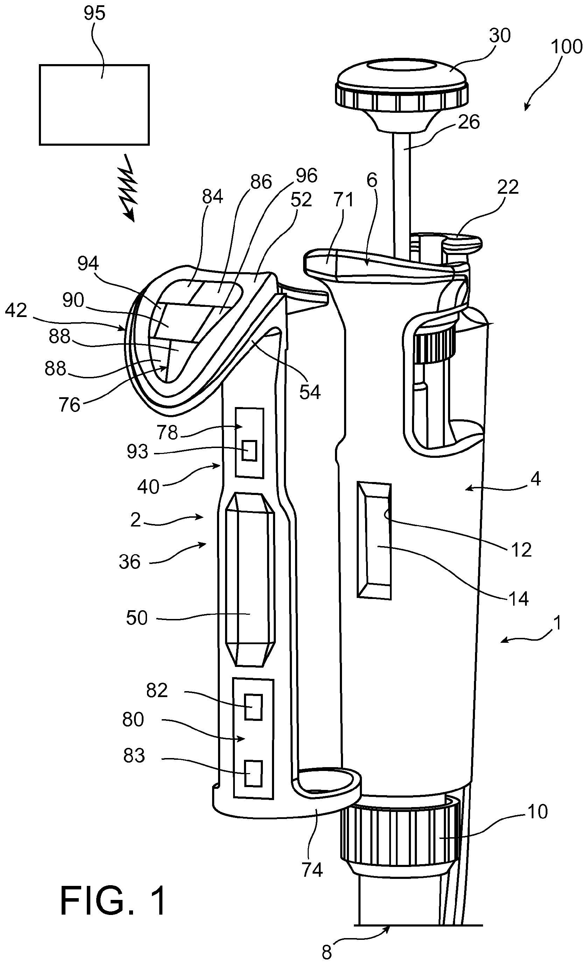

En référence aux figures 1 à 5, il est représenté un kit 100 selon un mode de réalisation préféré de l'invention. Le kit 100 comporte une pipette mécanique de prélèvement 1 à actionnement manuel, capable de fonctionner de façon autonome. Il comporte également un accessoire 2 destiné à équiper la pipette, afin de lui conférer des fonctions de traçabilité et/ou d'aide au pipetage en temps réel. L'accessoire 2 est prévu fonctionner de manière autonome lorsqu'il est installé sur la pipette 1.

Tout d'abord pour ce qui concerne la pipette 1, celle-ci comporte de manière conventionnelle un corps supérieur 4 qui forme une poignée destinée à être agrippée par un opérateur durant les opérations de pipetage. Ce corps supérieur de pipette 4 présente en partie haute un crochet de support d'index 6, sous forme de saillie radiale vers l'extérieur. Le corps supérieur 4 présente en partie centrale une fenêtre 12 à travers laquelle l'opérateur peut lire les informations délivrées par un dispositif d'affichage de volume à prélever 14, prévue à l'intérieur du corps supérieur 4. Ce dispositif 14 est préférentiellement un dispositif mécanique à roues, connu de l'art antérieur.

Une partie basse de pipette 8 est montée sur le corps formant poignée 4, par l'intermédiaire d'une bague de serrage 10. Cette partie basse 8 est également équipée d'une chambre 16 à travers laquelle un piston (non représenté) est destiné à coulisser axialement durant les opérations de pipetage.

La pipette comporte par ailleurs un éjecteur 20 traversant le corps supérieur 4 de manière à faire apparaître un bouton d'éjection 22 en partie haute de la pipette. Cet éjecteur 20 s'étend également vers le bas avec son extrémité d'éjection 24 coulissant autour de la chambre 16.

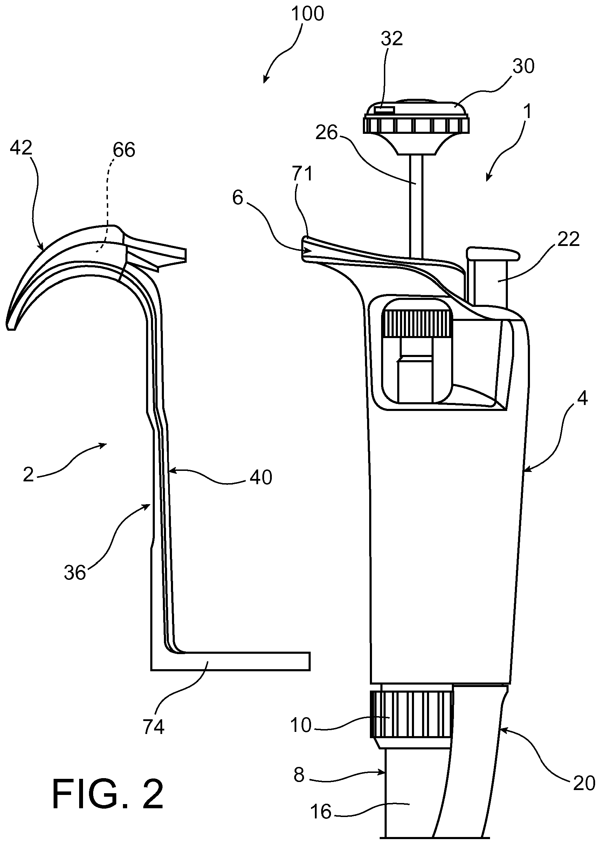

En partie haute de la pipette, une tige de commande 26 fait saillie axialement vers le haut. À son extrémité haute, il est prévu un bouton de commande 30, de préférence équipé d'au moins un capteur 32 qui sera discuté ci-après. Ce capteur 32 a été représenté de manière schématisée sur la figure 2. A son extrémité basse, la tige de commande 26 pilote les déplacements du piston de la pipette, en association avec un système de ressorts de rappel connu de l'art antérieur.

C'est sur cette pipette mécanique 1 que l'accessoire 2 est destiné à être monté de manière réversible, et plus précisément autour du corps supérieur de pipette 4.

Pour ce faire, l'accessoire 2 comporte un corps d'accessoire 36, des moyens de fixation de ce corps d'accessoire 36 sur le corps supérieur pipette 4, ainsi que des moyens de fonctionnalisation de cet accessoire autonome.

Tout d'abord pour ce qui concerne la partie structurelle de cet accessoire, le corps 36 comporte ici une partie centrale 40 destinée à longer axialement le corps supérieur de pipette 4 sur sensiblement toute la longueur de celui-ci, ainsi qu'un crochet de support d'index 42 agencé au-dessus de la partie centrale 40. Cette dernière s'étend sous forme de bande étroite et fine, le long d'une zone du corps supérieur de pipette 4 qui se situe dans le prolongement axial du support d'index 6, vers le bas.

A titre d'exemple non limitatif, la longueur de la bande 40 peut être de l'ordre de 3 à 10 cm, sa largeur comprise entre 1 et 2 cm, et son épaisseur comprise entre 0,1 et 0,5 cm.

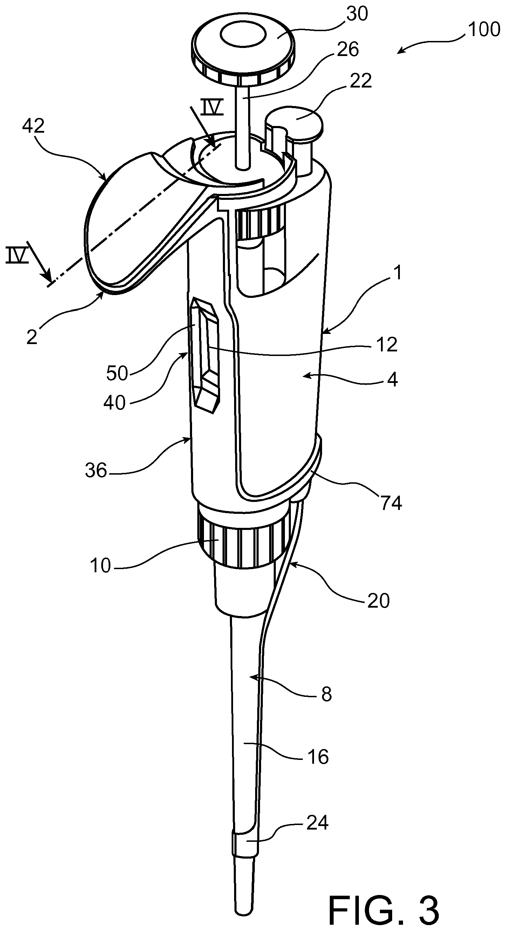

La bande 40 peut être pleine, ou préférentiellement pourvu d'une ouverture 50 qui forme une fenêtre de visualisation. À l'état monté tel que montré sur la figure 3, c'est-à-dire en configuration assemblée de l'accessoire sur la pipette, l'ouverture 50 de cet accessoire coïncide avec la fenêtre 12 du corps supérieur 4. Par conséquent, grâce à cette superposition de l'ouverture 50 avec la fenêtre 12, l'opérateur peut lire les informations délivrées par le dispositif 14 d'affichage du volume à prélever.

Le crochet 42 est quant à lui réalisé à l'aide de deux parties distinctes montées l'une sur l'autre, de préférence par clipsage. Il s'agit d'une partie supérieure de crochet 52 et d'une partie inférieure de crochet 54, cette dernière pouvant être réalisé d'une seule pièce avec la partie centrale 40 du corps d'accessoire 36. La surface inférieure 56 de la partie 54 forme une butée axiale pour l'index d'un opérateur tenant la pipette équipée de l'accessoire, au cours d'une opération de pipetage.

Pour assurer la liaison par clipsage, la partie supérieure de crochet 52 est équipée au niveau de sa surface intérieure 58 d'une ou plusieurs griffes 60 se projetant radialement vers le bas. Ces griffes 60 coopèrent avec d'autres griffes 62 faisant saillie vers le haut à partir de la surface intérieure 64 de la partie inférieure de crochet 54.

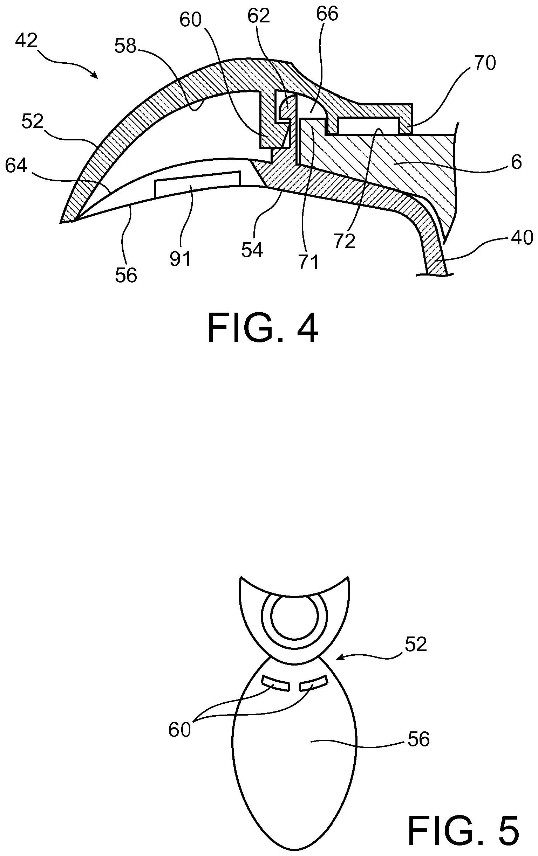

Entre ses deux parties 52, 54, le crochet 42 définit un creux 66 formant partie intégrante des moyens de fixation de l'accessoire sur la pipette. Comme cela est le mieux visible sur la figure 4, le creux 66 est en effet en partie comblé par le crochet de support d'index 6 de la pipette, dont une extrémité distale 71 est enserrée entre l'ensemble de griffes 60, 62, et une projection 70 en forme d'anneau s'étendant vers le bas depuis la surface intérieure 58 de la partie supérieure de crochet 52. Pour assurer le blocage entre ces pièces, l'ensemble de griffes 60, 62, extrémité distale 71 du support d'index 6, ainsi que la partie de la projection annulaire 70 coopérant avec cette extrémité, sont chacun conformé en arc de cercle de manière à présenter des surfaces de formes complémentaires. En outre, la projection annulaire 70 pénètre dans une zone évidée 72 du support d'index 6 de la pipette. Il est aussi noté que l'adjonction du crochet 42 sur le crochet 6 de la pipette, dans l'état monté de l'accessoire, permet de rallonger ce crochet 6 et donc d'offrir une meilleure ergonomie pour l'opérateur.

Par conséquent, le creux 66 ainsi que les éléments 60, 62, 70 forment ensemble des moyens supérieurs de fixation de l'accessoire 2 sur le corps supérieur de pipette 4. Pour compléter ces moyens, l'accessoire est équipé au niveau de l'extrémité basse sa portion centrale 40, un anneau de fixation 74 destiné à entourer entièrement la partie inférieure du corps supérieur de pipette 4. L'anneau 74 entoure l'extrémité basse du corps supérieur de pipette 4, et présente une forme complémentaire de celle de ce corps 4. De préférence, seul un jeu de montage est prévu entre les deux éléments 4, 74, dont l'anneau est préférentiellement réalisé d'un seul tenant avec la partie centrale 40 du corps d'accessoire 36 et avec la partie inférieure de crochet 54. A cet égard, cette pièce d'un seul tenant est préférentiellement réalisée en matière plastique, par exemple du type polypropylène ou tout autre matière plastique injectable. A l'état monté, l'anneau 74 se trouve juste au-dessus de la bague de serrage 10 de la pipette.

Avec cette structure, l'accessoire 2 présente plusieurs zones dans lesquelles des composants peuvent être fixés afin de fonctionnaliser la pipette. Il s'agit en particulier d'une première zone 76 au niveau du crochet 42, d'une seconde zone 78 au-dessus de l'ouverture 50, et d'une troisième zone 80 située sous cette même ouverture 50. Il est précisé que la première zone 76 peut en réalité être formée par plusieurs sous-zones distinctes au sein de crochet 42, logeant chacune un ou plusieurs composants. Il en est de même pour les seconde et troisième zones 78, 80.

De préférence, des composants sont embarqués dans chacune de ces trois zones 76, 78, 80. Un exemple de réalisation va à présent être décrit en référence à la figure 1, étant néanmoins précisé que la répartition des composants dans les différentes zones peut être modifiée, sans sortir du cadre de l'invention.

Il s'agit tout d'abord d'un module d'alimentation électrique 82, agencé dans la zone 80 qui loge également un capteur 83 du type infrarouge, pour la mesure de la température de l'échantillon liquide prélevé par la pipette. Le module 82 prend par exemple la forme d'une simple batterie.

Il est aussi prévu un microcontrôleur 84 de traitement des données obtenues par les capteurs de l'accessoire, ainsi qu'une horloge temps réel 86 destinée à l'horodatage des opérations de pipetage et/ou à la surveillance des opérations de maintenance, par exemple pour surveiller la prochaine calibration à effectuer. Ces deux composants 84, 86 sont de préférence agencés dans la zone 76 du crochet, tout comme un ou plusieurs capteurs environnementaux 88, comme un capteur de température de l'air ambiant ainsi qu'un capteur de pression atmosphérique. Ces capteurs, comme tous les autres éventuels capteurs et autres composants embarqués sur l'accessoire 2, sont alimentés électriquement par le module 82.

La zone 76 du crochet loge également un module 90 d'affichage des données obtenues par les capteurs, et éventuellement traitées par le microcontrôleur 84. Ce module d'affichage optionnel se situe de préférence sur la partie supérieure de crochet 52, pour une parfaite lisibilité pour l'opérateur.

Egalement, un capteur de force 91 schématisé sur la figure 4 peut équiper la partie inférieure de crochet 54. L'effort de réaction provoqué par l'index de l'opérateur sur cette partie inférieure de crochet 54 permet en effet de suivre, de manière astucieuse, le mouvement du piston dans la pipette. Chaque valeur d'effort de réaction de l'index sur cette partie 54 correspond à une quantité précise d'écrasement du système de ressorts de rappel du piston, quantité d'écrasement qui correspond quant à elle à une position précise du piston le long de sa course d'aspiration / de dispense. A titre d'exemple, il est possible avec ce capteur de force 91 de déterminer l'arrivée du piston en phase de purge, et donc d'utiliser ces données pour effectuer un comptage du nombre d'opérations de pipetage effectuées avec la pipette équipée de l'accessoire.

La zone intermédiaire 78 loge de préférence un accéléromètre 93, capable d'effectuer une ou plusieurs détections parmi lesquelles une détection de prise de cône de prélèvement, une détection d'éjection de cône de prélèvement, une détection de conformité de la méthode de prise de cône, l'angle de la pipette durant le pipetage, ou encore d'effectuer la surveillance de la stabilité de la pipette pendant l'aspiration du liquide à prélever.

La zone 76 du crochet peut également loger un module d'alarme 94 et un module de communication sans fil 96. Le module 94 est destiné à activer une alarme en fonction des données obtenues par les capteurs, cette alarme étant du type sonore, et/ou lumineux, et/ou haptique. Le module de communication sans fil 96, de préférence du type Bluetooth ou Wifi, est quant à lui conçu pour permettre à l'accessoire de communiquer d'une part avec les capteurs, et d'autre part avec un appareil distant de traitement de l'information agencé à distance de la pipette. Cet appareil 95 peut être du type tablette, PC, Smartphone, etc., et enregistre tout évènement interprété à partir de données fournies par les capteurs pendant les opérations de pipetage. Par exemple, les valeurs de pressions mesurées au cours des opérations de pipetage sont transmises à l'appareil de traitement de l'information, qui trace en temps réel une courbe représentant les variations de la pression mesurée en fonction du temps. L'analyse de la courbe obtenue permet de détecter une anomalie dans une opération de pipetage, et de déclencher le cas échéant, en temps réel, une alarme au moyen du module d'alarme 94.

De manière générale, le module de communication sans fil 96 envoie un message contenant toutes les informations fournies par chaque capteur à l'appareil 95, qui compare les informations envoyées avec le résultat attendu à l'étape du protocole de pipetage en cours. Par ailleurs, les informations recueillies par l'appareil de traitement de l'information 95 sont recoupées entre elles. Si l'appareil de traitement de l'information détecte une anomalie dans l'exécution du protocole, il renvoie à l'accessoire 2 un signal d'erreur au moyen du module de communication sans fil 96. A la réception de ce signal d'erreur, le module concerné 94 de l'accessoire génère instantanément un signal d'alarme. De cette manière, l'opérateur peut réagir instantanément à l'anomalie, par exemple en corrigeant l'inclinaison de sa pipette pour la rendre conforme au protocole.

En outre, si la date courante est postérieure à la date de prochaine maintenance ou contrôle, alors une alarme est envoyée à l'opérateur lui signifiant que la pipette et/ou l'accessoire ne peut être utilisé.

Les alarmes ainsi listées, basées sur les informations relevées par les capteurs et comparées aux informations relayées par l'appareil de traitement de l'information 95, permettent d'avoir un contrôle accru de l'exécution des protocoles de pipetage sans demander à l'opérateur de faire ces vérifications lui-même.

Néanmoins, il est noté que l'invention couvre également des accessoires au sein desquels les données relevées par les capteurs sont simplement affichées sur le module d'affichage 90, et/ou génèrent un alarme via le module dédié 94, sans être préalablement transmises à un appareil distant de traitement de l'information.

Pour ce qui concerne le comptage du nombre de cycles ou toute autre utilisation des données du capteur de force 91 agencé à la surface 56 du corps inférieur de crochet 54, ces données peuvent être exploitées au sein de l'accessoire, et/ou dans l'appareil de traitement 95 via le module de communication sans fil 96.

En outre, ce module de communication sans fil 96 permet à l'accessoire 2 de communiquer avec le / les capteurs 32 agencés dans le bouton de commande 30. Ces capteurs peuvent être de nature quelconque, par exemple l'un ou plusieurs des capteurs présentés ci-dessus comme équipant l'accessoire, et qui seraient déportés dans le bouton 30.

Les composants précités de l'accessoire peuvent être fixés au corps d'accessoire 36 par des moyens conventionnels, par exemple par collage, brasage, surmoulage, ou encore encapsulage.

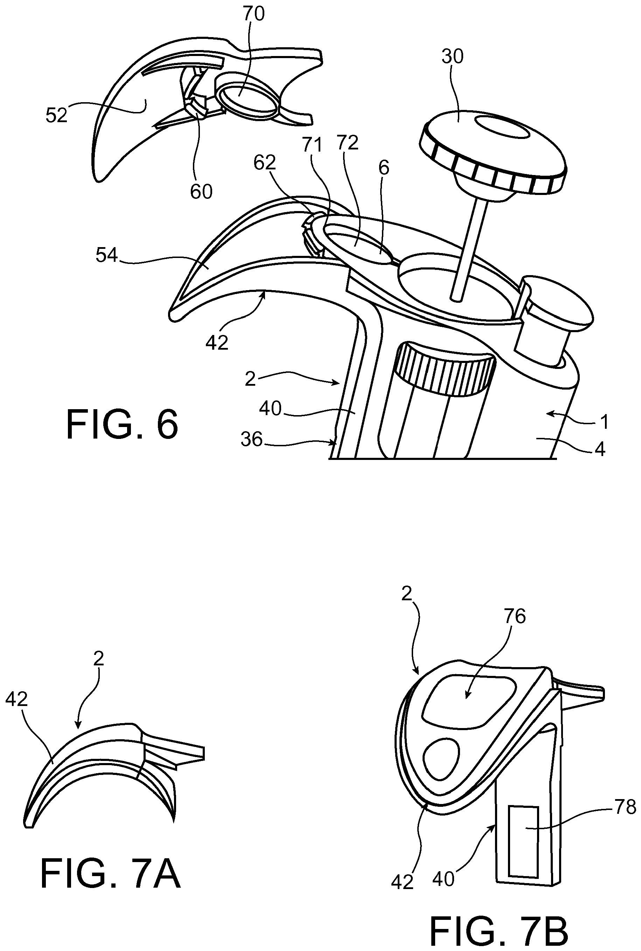

En référence à présent à la figure 6, il est représenté le kit au cours du montage de l'accessoire 2 sur la pipette 1. Tout d'abord, la partie d'une seule pièce 40, 54 est mise en place de sorte que son anneau de fixation 74 (non visible sur la figure 6) entoure le corps supérieur 4 de pipette. Ensuite, la partie centrale 40 du corps d'accessoire 36 est plaquée contre le corps 4 de la pipette, de même que la partie inférieure de crochet 54 est plaquée contre le crochet de support d'index 6 de cette pipette. Dans cet état intermédiaire de montage montré sur la figure 6, l'extrémité distale 71 du crochet 6 est agencée contre les griffes de clipsage 62 de la partie inférieure de crochet 54.

Ensuite, la partie supérieure de crochet 52 est amenée par le haut, puis clipsée sur l'ensemble en faisant coopérer ses griffes 60 avec les griffes 62 de la partie inférieure de crochet 54, tout en introduisant sa projection annulaire 70 dans la zone évidée 72 du support d'index 6.

Enfin, les figures 7A à 7D montrent d'autres formes de réalisation pour l'accessoire 2, intégrant toujours tout ou partie des composants décrits précédemment.

A cet égard, la figure 7A représente un accessoire 2 dont la structure se réduit au simple crochet 42 du premier mode de réalisation montré sur les figures précédentes. Néanmoins, il s'agit d'une partie volumineuse au sein de laquelle il est possible d'implanter un grand nombre de composants visant à fonctionnaliser l'accessoire.

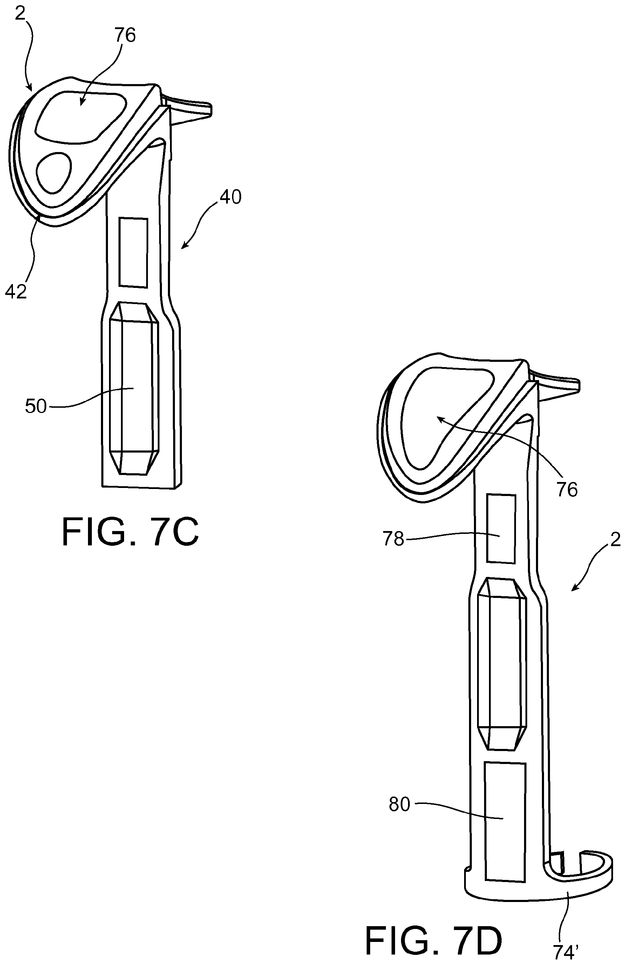

Sur la figure 7B, le crochet 42 est complété par une portion seulement de la partie centrale 40 du premier mode, cette partie 40 étant exempte de moyens de fixation, et simplement destinée à être plaquée sur le corps supérieur de pipette. Il en est de même pour l'exemple de la figure 7C, dont la partie centrale est rallongée vers le bas jusqu'à intégrer l'ouverture 50.

L'exemple de la figure 7D contraste avec le premier mode de réalisation seulement par la forme des moyens inférieurs de fixation de l'accessoire 2, qui ne sont plus réalisés par un anneau complet mais par un clip 74' en forme d'anneau incomplet destiné à entourer partiellement le corps supérieur de pipette. Ce clip 74' présente l'avantage de pouvoir être inséré latéralement sur le corps supérieur de la pipette, sans nécessiter un démontage de la partie basse de cette pipette.

Il est également noté que l'accessoire pourrait être dépourvu du crochet 42, sans sortir du cadre de l'invention.

Bien entendu, diverses modifications peuvent être apportées par l'homme du métier à l'invention qui vient d'être décrite, uniquement à titre d'exemples non limitatifs, et dont la portée est définie par les revendications annexées. Par exemple, l'accessoire pourrait être dépourvu de l'ouverture 50 formant fenêtre 50.

## Revendications

1. Kit (100) comprenant une pipette mécanique (1) de prélèvement à actionnement manuel, ainsi qu'un accessoire (2) destiné à être monté de manière réversible autour d'un corps supérieur de pipette (4) formant poignée, ledit accessoire comprenant un corps d'accessoire (36) ainsi que des moyens de fixation (60, 62, 66, 70, 74, 74') du corps d'accessoire sur le corps supérieur de pipette (4), l'accessoire (2) comprenant également, fixés au corps d'accessoire et/ou auxdits moyens de fixation :
a) un module d'alimentation électrique (82) ;
b) au moins un capteur (83, 88, 91, 93) alimenté électriquement par ledit module d'alimentation (82) ; et
- au moins un module parmi lesquels :
c) un module (90) d'affichage des données obtenues par le / les capteurs ;
d) un module (94) d'alarme destinée à être activée en fonction des données obtenues par le / les capteurs ;
e) un module (96) de communication sans fil permettant à l'accessoire (2) de communiquer d'une part avec le / les capteurs, et d'autre part avec un appareil de traitement de l'information (95) agencé à distance de la pipette,
et en ce que le corps d'accessoire (36) comporte un crochet de support d'index (42), destiné à former une butée axiale pour l'index d'un opérateur tenant la pipette (1) équipée de l'accessoire (2) au cours d'une opération de pipetage, ledit crochet (42) définissant un creux (66) formant partie desdits moyens de fixation, ledit creux recevant un crochet de support d'index (6) prévu sur le corps supérieur de pipette (4) formant poignée.

2. Kit selon la revendication 1, **caractérisé en ce qu'**il comprend également, fixés au corps d'accessoire (36) et/ou auxdits moyens de fixation, au moins l'un des éléments suivants :
f) un microcontrôleur (84) de traitement des données obtenues par le / les capteurs ;
g) une horloge temps réel (86) destinée à l'horodatage des opérations de pipetage et/ou à la surveillance des opérations de maintenance.

3. Kit selon la revendication 1 ou la revendication 2, **caractérisé en ce que** ledit au moins un capteur correspond à au moins l'un des éléments suivants :
- un accéléromètre (93) ;
- un capteur de force (91) ;
- un ou plusieurs capteurs environnementaux (88), parmi lesquels un capteur de pression atmosphérique et un capteur de température de l'air ambiant ; et
- un capteur infrarouge (83) pour la mesure de la température de l'échantillon prélevé par la pipette.

4. Kit selon l'une quelconque des revendications précédentes, **caractérisé en ce que** ledit module d'alarme (94) est du type sonore, et/ou lumineux, et/ou haptique.

5. Kit selon l'une quelconque des revendications précédentes, **caractérisé en ce que** ledit module de communication sans fil (96) est du type Bluetooth.

6. Kit selon l'une quelconque des revendications précédentes, **caractérisé en ce que** ledit crochet de support d'index (42) porte au moins l'un des éléments a) à g), et de préférence un capteur de force (91) agencé au niveau d'une partie inférieure (54) de ce crochet.

7. Kit selon l'une quelconque des revendications précédentes, **caractérisé en ce que** ledit crochet de support d'index (42) est réalisé à l'aide de deux parties distinctes montées l'une sur l'autre, parmi lesquelles une partie supérieure de crochet (52) et une partie inférieure de crochet (54) entre lesquelles est défini ledit creux (66) lorsqu'elles sont assemblées.

8. Kit selon l'une quelconque des revendications précédentes, **caractérisé en ce que** le corps d'accessoire (36) comporte également une partie centrale (40) destinée à longer axialement le corps supérieur (4) de la pipette, et présentant de préférence une ouverture (50) formant une fenêtre de visualisation.

9. Kit selon la revendication 8, **caractérisé en ce que** ladite partie centrale (40) porte au moins l'un des éléments a) à g), et de préférence le module d'alimentation électrique (82).

10. Kit selon la revendication 8 ou la revendication 9, **caractérisé en ce que** ladite partie centrale (40) s'étend sur sensiblement toute la longueur du corps supérieur de pipette (4), sur une largeur de préférence comprise entre 1 et 2 cm, et sur une épaisseur de préférence comprise entre 0,1 et 0,5 cm.

11. Kit selon l'une quelconque des revendications précédentes, **caractérisé en ce que** les moyens de fixation du corps d'accessoire comportent un anneau (74) destiné à entourer le corps supérieur de pipette (4), et/ou un clip (74') destiné à entourer partiellement ce corps supérieur de pipette.

12. Kit selon l'une quelconque des revendications précédentes, **caractérisé en ce que** la pipette comporte une bouton de pipetage (30) équipé d'au moins un capteur additionnel (32) capable de communiquer avec ledit module de communication sans fil (96) prévu dans l'accessoire (2).

13. Kit selon l'une quelconque des revendications précédentes, combinée à la revendication 8, **caractérisé en ce que** la pipette comprend un dispositif (14) d'affichage du volume à prélever, ledit dispositif (14) étant visible au travers d'une fenêtre (12) prévue sur le corps supérieur de pipette (4), et **en ce qu'**en configuration assemblée sur la pipette, ladite ouverture (50) de la partie centrale (40) de l'accessoire (2) coïncide avec ladite fenêtre (12) du corps supérieur de pipette (4).

## Patentansprüche

1. Kit (100), das eine manuell betätigbare mechanische Entnahmepipette (1) sowie ein Zubehör (2) umfasst, das dazu bestimmt ist, reversibel um einen oberen Pipettenkörper (4) montiert zu sein und ein Griffstück zu bilden, wobei das Zubehör einen Zubehörkörper (36) sowie Befestigungsmittel (60, 62, 66, 70, 74, 74') des Zubehörkörpers am oberen Pipettenkörper (4) umfasst, wobei das Zubehör (2) ebenfalls Folgendes, das am Zubehörkörper und/oder an den Befestigungsmitteln fixiert ist, umfasst:
a) ein elektrisches Stromversorgungsmodul (82);
b) mindestens einen Sensor (83, 88, 91, 93), der von dem Stromversorgungsmodul (82) elektrisch betrieben wird; und
- mindestens ein Modul aus den folgenden:
c) ein Anzeigemodul (90) für Daten, die durch den bzw. die Sensoren erhalten werden;
d) ein Alarmmodul (94), das dazu bestimmt ist, in Abhängigkeit von den durch den bzw. die Sensoren erhaltenen Daten aktiviert zu werden;
e) ein drahtloses Kommunikationsmodul (96), das es dem Zubehör (2) ermöglicht, einerseits mit dem bzw. den Sensoren und andererseits mit einem Informationsverarbeitungsgerät (95), das entfernt von der Pipette angeordnet ist, zu kommunizieren,
und dadurch, dass der Zubehörkörper (36) einen Zeigefingerhaltehaken (42) aufweist, der dazu bestimmt ist, einen axialen Anschlag für den Zeigefinger eines Bedieners zu bilden, der die mit dem Zubehör (2) ausgestattete Pipette (1) während eines Pipettiervorgangs hält, wobei der Haken (42) einen Hohlraum (66) definiert, das einen Teil der Befestigungsmittel bildet, wobei der Hohlraum einen Zeigefingerhaltehaken (6) aufnimmt, der am oberen Pipettenkörper (4) vorgesehen ist und ein Griffstück bildet.

2. Kit nach Anspruch 1, **dadurch gekennzeichnet, dass** es ebenfalls mindestens eines der folgenden Elemente umfasst, die am Zubehörkörper (36) und/oder an den Befestigungsmitteln fixiert sind:
f) einen Verarbeitungsmikrocontroller (84) für Daten, die durch den bzw. die Sensoren erhalten werden;
g) eine Echtzeituhr (86), die für die Zeitangaben der Pipettiervorgänge und/oder die Überwachung der Wartungsvorgänge bestimmt ist.

3. Kit nach Anspruch 1 oder Anspruch 2, **dadurch gekennzeichnet, dass** der mindestens eine Sensor mindestens einem der folgenden Elemente entspricht:
- einem Beschleunigungsmesser (93);
- einem Kraftsensor (91);
- einem oder mehreren Umgebungssensoren (88), darunter ein Luftdrucksensor und ein Temperatursensor der Umgebungsluft; und
- einem Infrarotsensor (83) für die Messung der Temperatur der durch die Pipette entnommenen Probe.

4. Kit nach einem der vorhergehenden Ansprüche, **dadurch gekennzeichnet, dass** das Alarmmodul (94) vom Typ Ton und/oder Licht und/oder Haptik ist.

5. Kit nach einem der vorhergehenden Ansprüche, **dadurch gekennzeichnet, dass** das drahtlose Kommunikationsmodul (96) vom Typ Bluetooth ist.

6. Kit nach einem der vorhergehenden Ansprüche, **dadurch gekennzeichnet, dass** der Zeigefingerhaltehaken (42) mindestens eines der Elemente a) bis g) und vorzugsweise einen Kraftsensor (91) betrifft, der auf Höhe eines unteren Abschnitts (54) dieses Hakens angeordnet ist.

7. Kit nach einem der vorhergehenden Ansprüche, **dadurch gekennzeichnet, dass** der Zeigefingerhaltehaken (42) mit Hilfe von zwei getrennt voneinander montierten Abschnitten hergestellt wird, darunter ein oberer Abschnitt des Hakens (52) und ein unterer Abschnitt des Hakens (54), zwischen denen der Hohlraum (66) definiert ist, wenn sie zusammengebaut sind.

8. Kit nach einem der vorhergehenden Ansprüche, **dadurch gekennzeichnet, dass** der Zubehörkörper (36) ebenfalls einen zentralen Abschnitt (40) aufweist, der dazu bestimmt ist, axial entlang des oberen Pipettenkörpers (4) zu fahren, und vorzugsweise eine Öffnung (50) aufweist, der ein Sichtfenster bildet.

9. Kit nach Anspruch 8, **dadurch gekennzeichnet, dass** der zentrale Abschnitt (40) mindestens eines der Elemente a) bis g) und vorzugsweise das elektrische Stromversorgungsmodul (82) betrifft.

10. Kit nach Anspruch 8 oder Anspruch 9, **dadurch gekennzeichnet, dass** der zentrale Abschnitt (40) sich im Wesentlichen über die ganze Länge des oberen Pipettenkörpers (4), über eine Breite zwischen vorzugsweise 1 und 2 cm und über eine Dicke zwischen vorzugsweise 0,1 und 0,5 cm erstreckt.

11. Kit nach einem der vorhergehenden Ansprüche, **dadurch gekennzeichnet, dass** die Befestigungsmittel des Zubehörkörpers einen Ring (74), der dazu bestimmt ist, den oberen Pipettenkörper (4) zu umgeben, und/oder eine Klammer (74') aufweist, die dazu bestimmt ist, den oberen Pipettenkörper teilweise zu umgeben.

12. Kit nach einem der vorhergehenden Ansprüche, **dadurch gekennzeichnet, dass** die Pipette einen Pipettierknopf (30) aufweist, der mit mindestens einem zusätzlichen Sensor (32) ausgestattet ist, der mit dem drahtlosen Kommunikationsmodul (96), das im Zubehör (2) vorgesehen ist, kommunizieren kann.

13. Kit nach einem der vorhergehenden Ansprüche, kombiniert mit Anspruch 8, **dadurch gekennzeichnet, dass** die Pipette eine Anzeigevorrichtung (14) für das zu entnehmende Volumen umfasst, wobei die Vorrichtung (14) durch ein Fenster (12) sichtbar ist, das im oberen Pipettenkörper (4) vorgesehen ist, und dadurch, dass die Öffnung (50) des zentralen Abschnitts (40) des Zubehörs (2) in der zusammengebauten Konfiguration der Pipette mit dem Fenster (12) des oberen Pipettenkörpers (4) zusammenfällt.

## Claims

1. A kit (100) comprising a mechanical sampling pipette (1) with manual actuation, as well as an accessory (2) intended to be mounted reversibly around an upper pipette body (4) forming a handle, said accessory comprising an accessory body (36) as well as means (60, 62, 66, 70, 74, 74') for fixing the accessory body to the upper pipette body (4), the accessory (2) also comprising, fixed to the accessory body and/or to said fixing means:
a) a power supply module (82);
b) at least one sensor (83, 88, 91, 93) power supplied by said power supply module (82); and
- at least one module including:
c) a module (90) for displaying the data obtained by the sensor(s);
d) an alarm module (94) intended to be activated according to the data obtained by the sensor(s);
e) a wireless communication module (96) allowing the accessory (2) to communicate on the one hand with the sensor(s), and on the other hand with an information processing apparatus (95) arranged remotely from the pipette,
and in that the accessory body (36) includes a forefinger support hook (42), intended to form an axial stop for the forefinger of an operator holding the pipette (1) equipped with the accessory (2) during a pipetting operation, said hook (42) defining a recess (66) forming part of said fixing means, said recess receiving a forefinger support hook (6) provided on the upper pipette body (4) forming handle.

2. The kit according to claim 1, **characterised in that** it also comprises, fixed to the accessory body (36) and/or to said fixing means, at least one of the following elements:
f) a microcontroller (84) for processing the data obtained by the sensor(s);
g) a real-time clock (86) intended for timestamping pipetting operations and/or monitoring maintenance operations.

3. The kit according to claim 1 or claim 2, **characterised in that** said at least one sensor corresponds to at least one of the following elements:
- an accelerometer (93);
- a force sensor (91);
- one or more environmental sensors (88), including an atmospheric pressure sensor and an ambient air temperature sensor; and
- an infrared sensor (83) for measuring the temperature of the sample taken by the pipette.

4. The kit according to any one of the preceding claims, **characterised in that** said alarm module (94) is of the sound, and/or luminous, and/or haptic type.

5. The kit according to any one of the preceding claims, **characterised in that** said wireless communication module (96) is of the Bluetooth type.

6. The kit according to any one of the preceding claims, **characterised in that** said forefinger support hook (42) carries at least one of the elements a) to g), and preferably a force sensor (91) arranged at a lower part (54) of this hook.

7. The kit according to any one of the preceding claims, **characterised in that** said forefinger support hook (42) is produced using two distinct parts mounted on each other, including an upper hook part (52) and a lower hook part (54) between which said recess (66) is defined when they are assembled.

8. The kit according to any one of the preceding claims, **characterised in that** the accessory body (36) also includes a central part (40) intended to axially run along the upper body (4) of the pipette, and preferably having an opening (50) forming a viewing window.

9. The kit according to claim 8, **characterised in that** said central part (40) carries at least one of elements a) to g), and preferably the power supply module (82).

10. The kit according to claim 8 or claim 9, **characterised in that** said central part (40) extends over substantially the entire length of the upper pipette body (4), over a width preferably comprised between 1 and 2 cm, and over a thickness preferably comprised between 0.1 and 0.5 cm.

11. The kit according to any one of the preceding claims, **characterised in that** the means for fixing the accessory body include a ring (74) intended to surround the upper pipette body (4), and/or a clip (74') intended to partially surround this upper pipette body.

12. The kit according to any one of the preceding claims, **characterised in that** the pipette includes a pipetting button (30) equipped with at least one additional sensor (32) capable of communicating with said wireless communication module (96) provided in the accessory (2).

13. The kit according to any one of the preceding claims, combined with claim 8, **characterised in that** the pipette comprises a device (14) for displaying the volume to be sampled, said device (14) being visible through a window (12) provided on the upper pipette body (4), and **in that** in the assembled configuration on the pipette, said opening (50) of the central part (40) of the accessory (2) coincides with said window (12) of the upper pipette body (4).
